# EUROPÄISCHE PATENTSCHRIFT

(11) **EP 3 269 694 B1**
(45) Veröffentlichungstag und Bekanntmachung des Hinweises auf die Patenterteilung: **08.06.2022**
(21) Anmeldenummer: 17180779.5
(22) Anmeldetag: 11.07.2017
(51) Int. Cl.: C04B 28/08, E21D 11/04

(54) **VERWENDUNG EINES MEHR-KOMPONENTEN-BAUSTOFFSYSTEMS**
USE OF A MULTI-COMPONENT BUILDING MATERIAL SYSTEM
UTILISATION D'UN SYSTÈME DE MATÉRIAUX DE CONSTRUCTION À PLUSIEURS COMPOSANTS

(30) Priorität: 12.07.2016 EP 16179108
(43) Veröffentlichungstag der Anmeldung: 17.01.2018
(73) Patentinhaber: MC-Bauchemie Müller GmbH & Co. KG Chemische Fabriken, 46238 Bottrop (DE); Porr Bau GmbH, 1100 Wien (AT)
(72) Erfinder: KLEEN, Eugen, 45614 Schermbeck (DE); HÖRLEIN, Norbert, 1220 Wien (AT)
(74) Vertreter: Zenz Patentanwälte Partnerschaft mbB

(56) Entgegenhaltungen:
- DE-B3-102008 033 447
- DE-B3-102009 008 451
- US-A1- 2012 152 153
- Jürgen Falbe ET AL: "Löslichkeitsprodukt" In: "Chemie-Lexikon", 31. Dezember 1990 (1990-12-31), Georg Thieme Verlag, Stuttgart [u.a.], XP055317008, ISBN: 978-3-13-734809-2 Seiten 2536-2537, * Seite 2536 - Seite 2537 *
- DATABASE WPI Week 200732 Thomson Scientific, London, GB; AN 2007-331665 XP002763914, & CN 1 868 956 A (CHINA RAILWAY TUNNEL GROUP CO LTD) 29. November 2006 (2006-11-29)

## Beschreibung

Die Erfindung betrifft die Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums sowie ein Verfahren zum Herstellen eines auf dem Mehr-Komponenten-Baustoffsystem basierenden Mörtels.

Auf Baustoffmischungen basierende Mörtel werden beispielsweise zum Verfüllen eines als Ringspalt ausgebildeten Hohlraums zwischen der Außenfläche von Tübbingringen und einem Baugrund eines Tunnelbauwerks eingesetzt. Die Baustoffmischung wird bei einer solchen Anwendung kurz vor dem Einbringen in den Hohlraum durch Mischen mit Wasser angemacht, wobei die Zusammensetzungen der Mischungen derart gewählt sind, dass diese nach dem Mischen nach einer kurzen Reaktionszeit innerhalb des Ringraums eine Gel-Konsistenz erlangen, so dass eine ausreichende Anfangsfestigkeit vorliegt und das Füllmaterial ausgehend von einem Schildschwanz einer zum Verlegen der Tübbinge verwendeten Tunnelvortriebsmaschine nicht in Richtung der Abbaukammer der Tunnelvortriebsmaschine fließen kann. Aus dem Artikel "Mörtel im Tunnelbau - Stand der Technik und aktuelle Entwicklungen zur Verfüllung des Ringspaltes bei Tunnelvortriebsmaschinen" von Professor Dr.-Ing. Markus Thewes und Dipl.-Ing. Christoph Budach, Bauportal 12/2009, S. 706-711 sind verschiedene Verfahren und Materialien zum Verfüllen des Ringspaltes bekannt. Wie dem Artikel zu entnehmen ist, wird üblicherweise ein zementhaltiger Ringspaltmörtel verwendet. Daneben ist auch eine Zwei-Komponenten-Baustoffmischung beschrieben (S. 709, Tabelle 3), wobei die Grundkomponente Wasser, Bentonit, Zement und einen Stabilisator enthält, der das Abbinden des Zements verzögern soll. Der Artikel nennt auch EinKomponenten-Ringspaltmörtel ohne Zement, welche anstelle des Zements Flugasche enthalten. Diese werden auch als inaktive Ringspaltmörtel bezeichnet. Derartige den Ringspalt füllende Mörtel werden verwendet, um das bei einem Stillstand des Systems mögliche Abbinden der Mischung in den Zuführleitungen zu vermeiden.

Bei Flugasche handelt es sich um ein puzzolanes Bindemittel, welches selbstständig nicht abbindet (deshalb "inaktiver Ringspaltmörtel" genannt). Zum Abbinden bedarf es der Zugabe eines Calciumhydroxids. Aus dem Artikel von L. Linger, M. Cayrol und L. Boutillon, "TBM's backfill mortars - Overview - Introduction to Rheological Index" in "Tailor Made Concrete Structures", Taylor & Francis Group, London, 2008, Seiten 271 bis 276, ist ein Füllmörtel bekannt (vgl. Absatz 2.2, Ziffer 4. auf Seite 272), bei dem der puzzolane Effekt bei pulverisierter Flugasche mittels Zugabe von Calciumhydroxid zum Abbinden genutzt wird.

Die vorgenannten Baustoffmischungen sind für eine Vielzahl von unterschiedlichen Baugründen geeignet. Nicht geeignet sind diese Baustoffmischungen aber zum Verfüllen von Hohlräumen, die an Calciumsulfat-Anhydrit-haltige Baugründe grenzen oder von Calciumsulfat-Anhydrit definiert werden. Bei Verwendung der vorgenannten Baustoffmischungen kann das Calciumsulfat-Anhydrit des Baugrundes Wasser aus dem auf Basis der Baustoffmischungen gebildeten Mörtel aufnehmen und aufquellen, was zu einer Volumenzunahme von mehr als 60 % führen kann. Diese Volumenzunahme kann dazu führen, dass der Baugrund aufbricht und weiteres Wasser eindringt, so dass die Quellung, die durch das Wasser des Mörtels in Gang gesetzt wurde, fortschreitet. Ist der lithostatische Druck des Gesteins über dem das Calciumsulfat-Anhydrit enthaltenden Baugrund geringer als der Quelldruck des Anhydrits, kann dieser nicht kompensiert werden und bewirkt einen erhöhten Druck auf den Tunnelquerschnitt bzw. auf das anstehende Gebirge mit damit verbundenen Hebungen der Erdoberfläche. US2012152153A1 zeigt Geopolymerzusammensetzungen. DE102008033447B3 zeigt silikatische Baustoffmischungen. DE102009008451B3 zeigt einen wasserdurchlässigen Mörtel zur Verfüllung von Hohlräumen. XP002763914 zeigt eine Zusammensetzung zur Auskleidung von Eisenbahntunneln.

Es ist Aufgabe der vorliegenden Erfindung, eine Verwendung eines Mehr-Komponenten-Baustoffsystem bereitzustellen. Es ist ferner Aufgabe der vorliegenden Erfindung, ein Verfahren zum Herstellen eines solches Mörtels sowie ein Verfahren zum Verfüllen eines an einen Calciumsulfat-Anhydrit enthaltenden Baugrund angrenzenden Hohlraums bereitzustellen.

Die erstgenannte Aufgabe wird erfindungsgemäß durch eine Verwendung eines Mehr-Komponenten-Baustoffsystems gemäß Anspruch 1 gelöst. Das Mehr-Komponenten-Baustoffsystem zum Herstellen eines Mörtels zum Verfüllen eines an einen Calciumsulfat-Anhydrit enthaltenden Baugrund angrenzenden Hohlraums umfasst eine zementklinker-freie Grundkomponente (GK) mit einem latent-hydraulischen Bindemittel und zumindest einem Zuschlagstoff, eine Aktivatorkomponente (AK) mit zumindest einem alkalischen und/oder sulfatischen Aktivator zum Aktivieren des latent-hydraulischen Bindemittels sowie eine Salzkomponente (SK) mit zumindest einem Salz, dessen Anionen mit Calciumkationen in einer wässrigen Lösung von 25°C ein Löslichkeitsprodukt bilden, das kleiner als 10⁻⁸ ist.

Das Mehr-Komponenten-Baustoffsystem umfasst mehrere Komponenten, nämlich die Grundkomponente, die Aktivatorkomponente sowie die Salzkomponente, von denen zumindest die Grund- sowie die Aktivatorkomponente vor dem Anmachen räumlich getrennt voneinander vorliegen. Die Salzkomponente (SK) des Systems ist in der Grundkomponente (GK) enthalten und die Anionen der Salzkomponente (SK) sind ausgewählt aus einer Gruppe umfassend Oxalat und Phosphat, und die Aktivatorkomponente (AK) enthält ein alkalisches Phosphat, vorzugsweise Tetrakalium- und/oder Tetranatriumpyrophosphat.

Unter Hohlraum soll hier jedes mit einem auf der Basis des Mehr-Komponenten-Baustoffsystems hergestellten Mörtel ganz oder teilweise verfüllbare Volumen verstanden werden, insbesondere ein Spalt zwischen einem Baugrund und einem Bauwerk. Unter Calciumsulfat-Anhydrit enthaltender Baugrund soll ein an den Hohlraum angrenzender Baugrund verstanden werden, der Calciumsulfat-Anhydrit in einer bei Zutritt von Wasser quellfähigen Form enthält.

Latent-hydraulische Bindemittel besitzen die Eigenschaft, bei einer entsprechenden Anregung (Aktivierung) selbstständig hydraulisch erhärten zu können. Im Unterschied zu Puzzolanen, welche zum Abbinden Calciumhydroxid verbrauchen, benötigen die latent-hydraulischen Bindemittel nur einen Anreger, d. h. alkalisches oder auch sulfatisches Milieu, um abzubinden, das heißt um CSH-Phasen zu bilden.

Bei dem Zuschlagstoff der Grundkomponente kann es sich beispielsweise um Sand, Kies oder eine Mischung daraus handeln, wobei eine Mischung bevorzugt ist, die Sand 0/2 und Kies 2/8 umfasst.

Für die Anregung des latent-hydraulischen Bindemittels der Grundkomponente sorgt die Aktivatorkomponente, die zumindest einen alkalischen und/oder sulfatischen Aktivator umfasst.

Ein alkalischer Aktivator im Sinne der vorliegenden Anmeldung ist eine Verbindung, die bei Kontakt mit Wasser Hydroxyl-Ionen freisetzt oder diese umfasst. Ein sulfatischer Aktivator im Sinne der vorliegenden Erfindung ist eine Verbindung, die bei Kontakt mit Wasser Sulfationen freisetzt oder diese umfasst. Von praktischer Relevanz sind hier insbesondere Sulfat-Verbindungen von Natrium, Kalium und Calcium.

Welcher Aktivator genau in welchen Mengen verwendet wird, hängt von der Zusammensetzung des Mehr-Komponenten-Baustoffsystems und insbesondere von dem verwendeten latent-hydraulischen Bindemittel ab, wobei die Auswahl eines geeigneten Aktivators für einen Fachmann selbstverständlich ist.

Die Zusammensetzung der Grundkomponente, insbesondere der Anteil des latent-hydraulischen Bindemittels, und die Zusammensetzung der Aktivatorkomponente, insbesondere die Art und der Anteil des Aktivators, sind vorteilhafterweise so gewählt, dass ein Mörtel entsteht, der nach einer kurzen Reaktionszeit von weniger als 5 Minuten, vorzugsweise weniger als 3 Minuten, insbesondere von etwa 30 - 60 Sekunden, eine Gel-Konsistenz erlangt. Anschließend härtet die Baustoffmischung aus.

Die Salzkomponente des Mehr-Komponenten-Baustoffsystems umfasst ein Salz, dessen Anionen mit Calciumkationen in einer wässrigen Lösung von 25°C ein Löslichkeitsprodukt bilden, das kleiner als 10⁻⁸ ist. Das Löslichkeitsprodukt ist die Bezeichnung für das Produkt der Konzentrationen bzw. Aktivitäten von Ionen in einer gesättigten Lösung. Das Löslichkeitsprodukt ist abhängig von der Temperatur und dem Lösungsmittel. Im Rahmen der vorliegenden Patentanmeldung ist das Löslichkeitsprodukt von wässrigen Lösungen bei einer Temperatur von 25°C gemeint.

Wird ein Mörtel basierend auf dem Mehr-Komponenten-Baustoffsystem in einen Hohlraum verfüllt, der an einen Baugrund mit Calciumsulfat-Anhydrit grenzt (beispielsweise der Ringspalt zwischen Tübbingen und umgebenden Baugrund beim Tunnelbau), geht, wie bei bekannten Mörteln, zunächst ein kleiner Teil des Calciumsulfat-Anhydrits in Lösung (oder quillt zumindest auf), die Konzentration an Calcium in der Grenzfläche Calciumsulfat-Anhydrit/Mörtelwasser steigt. Sobald ein durch das Anion des Salzes der Salzkomponente vorgegebenes Löslichkeitsprodukt Calcium/Anion überschritten ist, entsteht eine feste Calcium-Anion-Verbindung. Diese fällt aber nicht im üblichen chemischen Sinne aus der "Lösung" (dem Mörtelwasser) aus, sondern lagert sich an dem Calciumsulfat-Anhydrit des Baugrundes ab und verhindert so, dass weiteres Calciumsulfat in Lösung geht, indem ein Kontakt zwischen dem Calciumsulfat-Anhydrit und dem Mörtelwasser vermieden wird. Auf dem Calciumsulfat-Anhydrit entsteht eine Schutzschicht aus der Calcium-Anion-Verbindung, die eine weitere Auflösung des Calciumsulfat-Anhydrits verhindert. Der stattfindende Vorgang kann also mit einer Passivierung einer Metalloberfläche verglichen werden.

Alternativ kann man sich diesen Vorgang derart vorstellen, dass Wasser in die äußere Schicht des Calciumsulfat-Anhydrits eindringt, eine geringfügige Quellung entsteht, diese aber nicht fortfährt, da in dieser dünnen Quellschicht sofort die unlösliche Calcium-Anion-Verbindung entsteht, die das Lösen/Quellen von weiterem Calciumsulfat verhindert.

Die Salzkomponente bedingt also zwei Effekte, die wirksam das Aufquellen des Calciumsulfat-Anhydrits vermeiden.

Effekt 1: Da das Löslichkeitsprodukt der Calcium-Anion-Verbindung geringer als das von Calciumsulfat ist, geht deutlich weniger Calcium in Lösung als dies bei einem Mörtelwasser der Fall wäre, welches kein solches Anion umfasst (in diesem Fall ist die Löslichkeit des Calciums durch das Löslichkeitsprodukt von Calciumsulfat vorgegeben).

Effekt 2: Das Calcium lagert sich als Calcium-Anion-Verbindung auf dem Calciumsulfat-Anhydrit des Baugrundes ab und verhindert einen Kontakt zwischen dem Calciumsulfat-Anhydrit und dem Mörtelwasser, so dass kein weiteres Calciumsulfat-Anhydrit in Lösung geht bzw. aufquillt. Die Calcium-Anion-Verbindung bewirkt eine "Passivierung" des Calciumsulfat-Anhydrits der Grenzschicht Calciumsulfat-Anhydrit/Mörtel.

In der Summe bewirken die beiden Effekte, dass eine Quellung des Calciumsulfat-Anhydrits des Baugrundes wirkungsvoll vermieden wird, es entsteht kein Quelldruck, der sich negativ auf ein Bauwerk, welches an einen verfüllten Hohlraum angrenzt, auswirken könnte oder eine Hebung des übergelagerten Gesteins bewirken könnte.

Die Menge der Salzkomponente bzw. des zumindest einen Salzes der Salzkomponente ist von dem zu verfüllenden Hohlraum und dem Salz selbst abhängig. Wenn ein Hohlraum mit großer Oberfläche verfüllt werden soll und der Baugrund vollständig aus Calciumsulfat-Anhydrit besteht, sind größere Mengen einzusetzen als bei einem Baugrund, in dem lediglich stellenweise Inseln aus Calciumsulfat-Anhydrit vorkommen. Die Feststellung der zumindest erforderlichen Menge ist für einen Fachmann bei Kenntnis des Baugrundes trivial.

Die Salzkomponente ist Teil der Grundkomponente. Ein entsprechendes Baustoffsystem mit lediglich zwei Komponenten ist einfach und kostengünstig zu handhaben.

Wesentlich für das Mehr-Komponenten-Baustoffsystem ist, dass das Löslichkeitsprodukt der Calcium-Anion-Verbindung kleiner 10⁻⁸ ist. Die Anionen des zumindest einen Salzes sind daher ausgewählt aus einer Gruppe umfassend Oxalat und Phosphat oder eine Mischung daraus. Unter Phosphat sollen hier sowohl Monoals auch Diphosphate und Hydrogenphosphate umfasst sein, sofern die Löslichkeitsprodukte der Calciumsalze den vorgenannten Anforderungen entsprechen. Salze der vorgenannten Anionen sind preiswert und deren Auswirkung auf die Umwelt gut erforscht.

Die Aktivatorkomponente umfasst ein alkalisches Phosphat, vorzugsweise Tetrakalium- und/oder Tetranatriumpyrophosphat. Dies hat den Vorteil, dass die Aktivatorkomponente zusätzliche Anionen bereitstellt, die mit Calcium eine schwerlösliche Verbindung bilden.

Bei dem Mehr-Komponenten-Baustoffsystems kann das latent-hydraulische Bindemittel gemahlener Hüttensand sein. Dieser ist nicht nur preiswert; sein Abbindevermögen kann außerdem nicht nur alkalisch, sondern auch sulfatisch aktiviert werden.

Das Hüttensandmehl kann sulfatisch anregbar sein. Dies ist üblicherweise dann der Fall, wenn der verwendete Hüttensand hochbasisch ist und einen hohen Anteil an Aluminiumoxid aufweist, wobei es sich bei diesen Bedingungen lediglich um Anhaltspunkte handelt. Ob ein Hüttensand sulfatisch anregbar ist, hängt von seiner genauen Zusammensetzung ab und kann nur schwer vorhergesagt werden. Es ist regelmäßig experimentell zu untersuchen, ob ein Hüttensand als sulfatisch abbindender Hüttensand in Frage kommt. Diese Ausführungsform des Mehr-Komponenten-Baustoffsystems eignet sich für das Verfüllen eines Hohlraums, der an einen Baugrund mit Calciumsulfat-Anhydrit angrenzt, besonders, da das zusätzliche Sulfat das Auflösen/Quellen von Calciumsulfat-Anhydrit vermindert. In diesem Sinne ist es besonders bevorzugt, wenn der sulfatische Aktivator Calciumsulfat (Gips) umfasst.

Die Grundkomponente kann außerdem Flugasche und/oder Silicastaub enthalten. In Abhängigkeit von der Zusammensetzung der Flugasche kann diese teilweise als latent-hydraulisches Bindemittel, teilweise als puzzolaner Stoff wirken. Silicastaub kann ebenfalls als puzzolaner Stoff eingesetzt werden. In Abhängigkeit von der genauen Beschaffenheit der Flugasche und/oder des Silicastaubes muss bei Zumischung dieser Bestandteile zu der Grundkomponente der Anteil und die Zusammensetzung der Aktivatorkomponente entsprechend angepasst werden. Durch die Zumischung der hier genannten optionalen Stoffe können die Eigenschaften des Baustoffsystems an die Einsatzbedingungen angepasst werden.

Zur weiteren Anpassung des Baustoffsystems an die Einsatzbedingungen kann es vorgesehen sein, dass die Grundkomponente zumindest ein Acrylat als Verflüssiger und/oder einen Entschäumer umfasst.

Die Basiskomponenten (Grundkomponente, Aktivatorkomponente, Salzkomponente) des Mehr-Komponenten-Baustoffsystems liegen in der Regel als Siloware (üblicherweise als Trockenmischung) an einer Mischanlage vor. Die Ausgangsstoffe werden vor der Verarbeitung mit entsprechenden Mengen Wasser angemacht.

In Abhängigkeit von dem Einsatzort kann es aber von Vorteil sein, dass die Grundkomponente Wasser, zumindest einen Zuschlagstoff und das latent-hydraulische Bindemittel umfasst, wobei der Anteil des latent-hydraulischen Bindemittels 5 - 30 Gew.-%, vorzugsweise 10 - 20 Gew.-%, bezogen auf die Gesamtmasse der Mehr-Komponenten-Baustoffmischung, ist. Eine solche Grundkomponente in Form einer Nassmischung ist für bis zu 24 h gut verarbeit- und pumpbar, der Aufwand des Anmachens vor Ort entfällt.

Das Mehr-Komponenten-Baustoffsystem kann das zumindest eine Salz in einem Anteil von 0,2 - 5 Gew.-% (bezogen auf die Gesamtmasse des Mehr-Komponenten-Baustoffsystems ohne Wasserzugabe) enthalten. Die genaue Menge ist jeweils abhängig von der Beschaffenheit des Baugrundes, sprich dem Anteil des Calciumsulfat-Anhydrits.

Der Anteil des zumindest einen Zuschlagstoffs an der Grundkomponente kann 40 - 80 Gew.-% betragen. Die Grundkomponente kann ferner Flugasche in einem Anteil von 10 - 30 Gew.-% umfassen.

Erfindungsgemäß wird der Mörtel zum Verfüllen eines an einen Calciumsulfat-Anhydrit enthaltenden Baugrund angrenzenden Hohlraums hergestellt, indem eine zementklinker-freie Grundkomponente (GK) mit einem latent-hydraulischen Bindemittel und zumindest einem Zuschlagstoff mit Wasser angemacht wird, eine Aktivatorkomponente (AK) mit einem alkalischen Aktivator in Wasser gelöst oder aufgeschlämmt wird und mit der Grundkomponente (GK) zu einer Grundkomponenten/Aktivatorkomponenten-Mischung gemischt wird, und ein Salz in Wasser gelöst oder aufgeschlämmt wird und mit der Grundkomponente gemischt wird. Die Grundkomponente, die Aktivatorkomponente oder die Grundkomponenten/Aktivatorkomponenten-Mischung enthält ein Salz (einer Salzkomponente), dessen Anionen mit Calciumkationen in einer wässrigen Lösung ein Löslichkeitsprodukt bilden, das kleiner als 10⁻⁸ ist, wobei dass die Salzkomponente (SK) in der Grundkomponente (GK) enthalten ist, und wobei die Anionen der Salzkomponente (SK) ausgewählt sind aus einer Gruppe umfassend Oxalat und Phosphat und wobei die Aktivatorkomponente (AK) ein alkalisches Phosphat, vorzugsweise Tetrakalium- und/oder Tetranatriumpyrophosphat, enthält.

Erfindungsgemäß wird ein an einen Calciumsulfat-Anhydrit enthaltenden Baugrund angrenzender Hohlraum verfüllt, indem eine zementklinker-freie Grundkomponente mit einem latent-hydraulischen Bindemittel und zumindest einem Zuschlagstoff mit Wasser angemacht wird, eine Aktivatorkomponente zum Aktivieren mit einem alkalischen und/oder sulfatischen Aktivator zum Aktivieren des latent-hydraulischen Bindemittels in Wasser gelöst oder aufgeschlämmt wird, und die Grundkomponente und die Aktivatorkomponente getrennt voneinander oder als Grundkomponenten/Aktivatorkomponenten-Mischung und in den Hohlraum verfüllt werden.

Im Hinblick auf die einzelnen Bestandteile der vorstehend beschriebenen Verfahren gelten die weiter oben dargelegten Ausführungen zu dem Mehr-Komponenten-Baustoffsystem entsprechend.

### Beispiele (nicht erfindungsgemäß)

Im Nachfolgenden wird die Erfindung anhand bevorzugter Ausführungsformen näher beschrieben.

Die nachfolgende Tabelle 1 zeigt die Zusammensetzung von zwei Mörteln M1 und M2 auf der Basis des Mehr-Komponenten-Baustoffsystems für 1 m³ Frischmörtel. Alle Angaben in der Tabelle beziehen sich auf kg/m³.

**Tabelle 1: Zusammensetzungen verschiedener Mörtel auf Basis der Baustoffmischung**

| Zusammensetzung Mörtel auf Basis der erfindungs gemäßen Baustoffmischung | M1 | M2 |
|---|---|---|
| Wasser | 220,00 | 220,00 |
| Sand 0/2 (Zuschlagstoff 1) | 856,00 | 856,00 |
| Kies 2/8 (Zuschlagstoff 2) | 538,00 | 538,00 |
| Hüttensandmehl (Bindemittel) | 200,00 | 200,00 |
| Flugasche (Füllstoff) | 365,00 | 365,00 |
| K₂HPO₄ (27,6 Gew.-%, 72, 4 Gew.-% Wasser) (Salzkomponente) | 13,00 | 13,00 |
| Fließmittel Acrylat 722 + 0,5 Marlowet Entschäumer | 2,26 | |
| Fließmittel Acrylat PJ 2002 + 0,5 Realis Defoamer | | 2,26 |
| Aktivator Betol 72 % (Wasserglas) | 86, 00 | 86, 00 |

Ein "Bereitstellungsgemisch" auf Basis des Mehr-Komponenten-Baustoffsystems wird hergestellt, indem eine Grundkomponente mit den angegeben Mengen Sand 0/2, Kies 2/8, Hüttensandmehl, Flugasche und Fließmittel mit der angegebenen Menge Wasser angemacht und mit der Salzkomponente vermischt wurde (K₂HPO₄ (27,6 Gew.-%, 72,4 Gew.-% Wasser) wurde. Dazu wurden die Feststoffe so lange trocken gemischt, bis eine homogene Trockenmischung entstand. Diese wurde dann mit der angegebenen Menge Wasser versetzt, welches zuvor mit dem Fließmittel versetzt wurde.

Der oben genannte Aktivator ist nicht Teil des Bereitstellungsgemisches, sondern wird erst an der Lisene zugegeben, ist aber Teil der Zusammensetzung wie oben angegeben. Diese Mischung wird wieder so lange gerührt, bis eine homogene Mischung entsteht.

Das so erhaltene "Bereitstellungsgemisch" verfügt über eine gute Pumpbarkeit und ist über einen Zeitraum von 24 h gut verarbeitbar.

Für Mörtel auf der Basis des erfindungsgemäßen Mehr-Komponenten-Baustoffsystems sind drei Systemphasen zu beachten:

### 1. Verarbeitungsphase

In dieser Phase wird das Bereitstellungsgemisch hergestellt. Anhand des Bereitstellungsgemisches werden die Frischmörteleigenschaften ermittelt.

### Konsistenzprüfung nach DIN EN 12350-5

Eine wesentliche Frischmörteleigenschaft ist die Konsistenz. Die Konsistenz beschreibt in der Betontechnologie übergeordnet die Verarbeitbarkeit, die Verdichtbarkeit, die Förderbarkeit und die Einbaubarkeit. Der Frischbeton bzw. Frischmörtel kann mit verschiedenen Prüfverfahren Konsistenzklassen zugeordnet werden.

Um die Frischmörteleigenschaften bestimmen zu können wird nach dem oben genannten Verfahren ein Bereitstellungsgemisch BM1 für Mörtel M1 hergestellt.

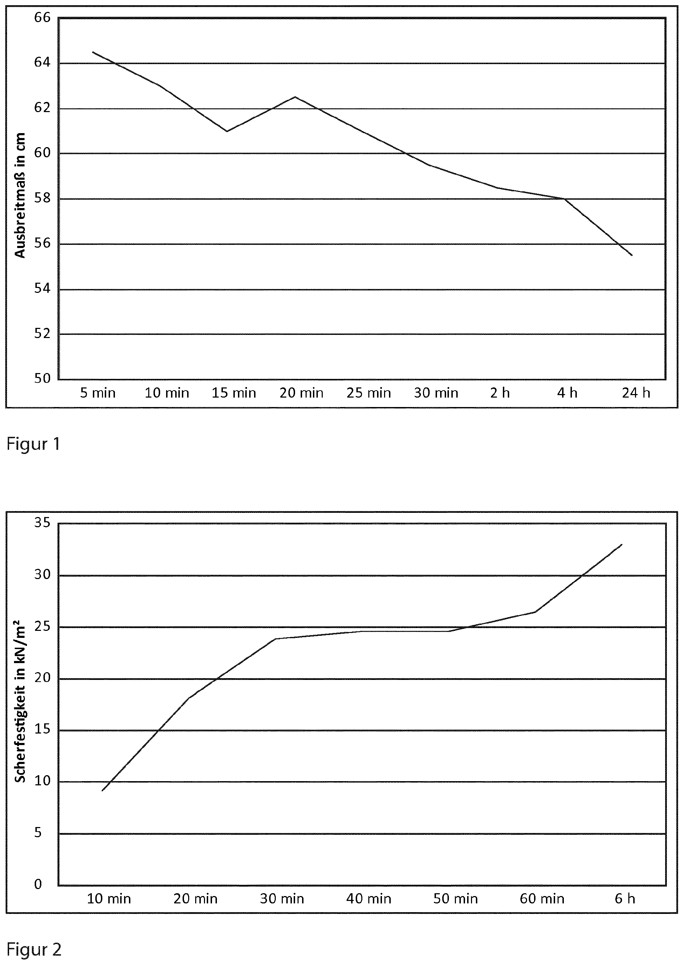

Auf der Basis von BM1 wird das Ausbreitmaß über 24 h Std. ermittelt und ist in nachfolgender Tabelle 2 wiedergeben und in Figur 1 dargestellt. Die Untersuchungen haben ergeben, dass über den gesamten Zeitraum von 24 Std. eine verarbeitungsgerechte Konsistenz erhalten bleibt (siehe dazu Figur 1).

**Tabelle 2: Konsistenzprüfung nach DIN EN 12350-5**

| Zeit | Ausbreitmaß (cm) |
|---|---|
| 5 min | 64,5 |
| 10 min | 60,0 |
| 15 min | 61,0 |
| 20 min | 62,5 |
| 25 min | 61,0 |
| 30 min | 59,5 |
| 2 h | 58,5 |
| 4 h | 58,0 |
| 24 h | 55,5 |

### 2. Gelphase

Die Gelphase wird durch Zugabe der Aktivatorkomponente eingeleitet. Zu Testzwecken wird die Aktivatorkomponente dem Bereitstellungsgemisch BM1 zugegeben.

Wird das erfindungsgemäße Verfahren zum Verfüllen eines Hohlraums durchgeführt, und handelt es sich bei diesem Hohlraum beispielsweise um einen Ringspalt zwischen von einer Tunnelvortriebmaschine gesetzten Tübbingen und einem Calciumsulfat-Anhydrit-haltigen Baugrund, wird die Aktivatorkomponente über eine Ringspaltlisene zugegeben.

Nach Einleitung der Gelphase kann nach ca. 60 - 90 Sek. ein Konsistenzverlust festgestellt werden. Der aktivierte Mörtel bleibt aber plastisch verformbar.

### Bestimmung der Erstarrungszeit nach DIN EN 196

Die entsprechend DIN EN 196 durchgeführte Bestimmung der Erstarrungszeit ergab einen Erstarrungsbeginn nach 90 Min.

### Flügelscherversuche nach DIN 4094

Die Flügelscherversuche nach DIN 4094 wurden unmittelbar nach Zugabe der Aktivatorkomponente durchgeführt, siehe dazu nachfolgende Tabelle 3 und Figur 2. Bei einer Scherfestigkeit von ca. 5 - 10 kN/m² sind die Bettungseigenschaften eines Tübbings gegeben.

**Tabelle 3: Flügelscherversuche nach DIN 4094**

| Zeit | Drehmoment Nm | Schwerfestigkeit kN/m² |
|---|---|---|
| 10 min | 14 | 9,1 |
| 20 min | 28 | 18,1 |
| 30 min | 37 | 23,9 |
| 40 mion | 38 | 24,6 |
| 50 min | 38 | 24,6 |
| 60 min | 41 | 26,5 |
| 6 h | 51 | 33,0 |

Der aktivierte Mörtel ist plastisch verformbar, was die Auftriebsgefahr verringert und gute Bettungseigenschaften bedingt.

### 3. Erhärtungsphase

Zur Charakterisierung der Erhärtungsphase wird die Druckfestigkeit zu verschiedenen Zeitpunkten nach Aktivierung ermittelt.

### Druckfestigkeit nach DIN EN 12390

Die Druckfestigkeit des aktivierten Mörtels M1 wurde 1 d, 7 d und 28 d nach Aktivierung des Bereitstellungsgemisches mit der Aktivatorkomponente ermittelt:

**Tabelle 4: Druckfestigkeit aktivierter Mörtel M1**

| nach X Tagen | Druckfestigkeit |
|---|---|
| 1 | 0,3 N/mm² |
| 7 | 3,1 N/mm² |
| 28 | 11,0 N/mm² |

Wie man anhand der Messergebnisse erkennt, sind Mörtel auf der Basis des Mehr-Komponenten-Baustoffsystems geeignet, erfindungsgemäß zum Verfüllen von Hohlräumen zwischen zum Beispiel Tübbingen und Baugrund verwendet zu werden. Aufgrund ihrer speziellen Zusammensetzung wird aber das bei Mörteln nach dem Stand der Technik beobachtete Aufquellen eines Calciumsulfat-Anhydrit enthaltenden Baugrunds wirkungsvoll vermieden.

## Patentansprüche

1. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums, wobei das Mehr-komponenten-Baustoffsystem umfasst:
eine zementklinker-freie Grundkomponente (GK) mit
- einem latent-hydraulischen Bindemittel und
- zumindest einem Zuschlagstoff, und
eine Aktivatorkomponente (AK) mit
- zumindest einem alkalischen und/oder sulfatischen Aktivator zum Aktivieren des latent-hydraulischen Bindemittels, und
eine Salzkomponente (SK) mit zumindest einem Salz, dessen Anionen mit Calciumkationen in einer wässrigen Lösung von 25°C ein Löslichkeitsprodukt bilden, das kleiner als 10⁻⁸ ist, wobei zumindest die Grund- sowie die Aktivatorkomponente vor dem Anmachen räumlich getrennt voneinander vorliegen und wobei dass die Salzkomponente (SK) in der Grundkomponente (GK) enthalten ist,
wobei die Anionen der Salzkomponente (SK) ausgewählt sind aus einer Gruppe umfassend Oxalat und Phosphat und wobei die Aktivatorkomponente (AK) ein alkalisches Phosphat, vorzugsweise Tetrakalium- und/oder Tetranatriumpyrophosphat, enthält.

2. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach Anspruch 1,
**dadurch gekennzeichnet, dass** das latent-hydraulische Bindemittel gemahlener Hüttensand, vorzugsweise sulfatisch anregbarer Hüttensand ist.

3. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach einem der Ansprüche 1 oder 2,
**dadurch gekennzeichnet, dass** die Grundkomponente (GK) Flugasche und/oder Silicastaub umfasst.

4. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach Anspruch 1 - 3,
**dadurch gekennzeichnet, dass** die Grundkomponente (GK) Wasser, zumindest einen Zuschlagstoff und das latent-hydraulische Bindemittel umfasst, wobei der Anteil des latent-hydraulischen Bindemittels 5 - 30 Gew.-%, vorzugsweise 10 - 20 Gew.-%, ist

5. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach einem der Ansprüche 1 - 4,
**dadurch gekennzeichnet, dass** das Mehr-Komponenten-Baustoffsystem das Salz in einem Anteil von 0,2 - 5 Gew.-% enthält.

6. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach einem der Ansprüche 1 - 5,
**dadurch gekennzeichnet, dass** der Anteil des zumindest einen Zuschlagstoffs an der Grundkomponente (GK) 40 - 80 Gew.% ist.

7. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach einem der Ansprüche 1 - 6, **dadurch gekennzeichnet, dass** die Grundkomponente Flugasche in 10 - 30 Gew.-% enthält.

8. Verwendung eines Mehr-Komponenten-Baustoffsystems zum Herstellen eines Mörtels zum Verfüllen eines an einen Calciumsulfat-Anhydrit enthaltenden Baugrund angrenzenden Hohlraums nach einem der Ansprüche 1 - 7, **dadurch gekennzeichnet, dass** der Hohlraum ein Ringspalt eines Tunnelbauwerks ist.

9. Verfahren zum Herstellen eines Mörtels zum Verfüllen eines an einen Calciumsulfat-Anhydrit enthaltenden Baugrund angrenzenden Hohlraums, wobei
eine zementklinker-freie Grundkomponente (GK) mit einem latent-hydraulischen Bindemittel und zumindest einem Zuschlagstoff mit Wasser angemacht wird,
eine Aktivatorkomponente (AK) mit einem alkalischen und/oder sulfatischen Aktivator zum Aktivieren des latent-hydraulischen Bindemittels in Wasser gelöst oder aufgeschlämmt wird und mit der Grundkomponente (GK) zu einer Grundkomponenten/Aktivatorkomponenten-Mischung gemischt wird,
wobei die Grundkomponente (GK), die Aktivatorkomponente und/oder die Grundkomponenten/Aktivatorkomponenten-Mischung (GAM) ein Salz enthält, dessen Anionen mit Calciumkationen ein Löslichkeitsprodukt bilden, das in einer wässrigen Lösung von 25°C kleiner als 10⁻⁸ ist,
wobei dass die Salzkomponente (SK) in der Grundkomponente (GK) enthalten ist,
und wobei die Anionen der Salzkomponente (SK) ausgewählt sind aus einer Gruppe umfassend Oxalat und Phosphat und wobei die Aktivatorkomponente (AK) ein alkalisches Phosphat, vorzugsweise Tetrakalium- und/oder Tetranatriumpyrophosphat, enthält.

10. Verfahren zum Verfüllen eines an einen Calciumsulfat-Anhydrit enthaltenden Baugrund angrenzenden Hohlraums, wobei
eine zementklinker-freie Grundkomponente mit einem latent-hydraulischen Bindemittel und zumindest einem Zuschlagstoff mit Wasser angemacht wird,
eine Aktivatorkomponente mit einem alkalischen und/oder sulfatischen Aktivator zum Aktivieren des latent-hydraulischen Bindemittels in Wasser gelöst oder aufgeschlämmt wird,
die Grundkomponente (GK) und die Aktivatorkomponente (AK) getrennt voneinander oder als eine Grundkomponenten/Aktivatorkomponenten-Mischung (GAM) in den Hohlraum verfüllt werden,
**dadurch gekennzeichnet, dass** die Grundkomponente (GK), die Aktivatorkomponente (AK) und/oder die Grundkomponenten/Aktivatorkomponenten-Mischung (GAM) ein Salz enthält, dessen Anionen mit Calciumkationen ein Löslichkeitsprodukt bilden, das in einer wässrigen Lösung von 25°C kleiner als 10⁻⁸ ist,
wobei die Salzkomponente (SK) in der Grundkomponente (GK) enthalten ist,
und wobei die Anionen der Salzkomponente (SK) ausgewählt sind aus einer Gruppe umfassend Oxalat und Phosphat und wobei die Aktivatorkomponente (AK) ein alkalisches Phosphat, vorzugsweise Tetrakalium- und/oder Tetranatriumpyrophosphat, enthält.

## Claims

1. Use of a multi-component building material system for producing a mortar for filling a cavity adjacent to a building ground containing calcium sulphate anhydrite, wherein the multi-component building material system comprises:
a cement clinker-free base component (GK) with
- a latent hydraulic binder and
- at least one aggregate, and
an activator component (AK) with
- at least one alkaline and/or sulphatic activator for activating the latent hydraulic binder, and
a salt component (SK) with at least one salt, the anions of which form a solubility product with calcium cations in an aqueous solution of 25°C, which is smaller than 10⁻⁸, wherein at least the base component and the activator component are spatially separated from each other before mixing and wherein the salt component (SK) is contained in the base component (GK),
wherein the anions of the salt component (SK) are selected from a group comprising oxalate and phosphate and wherein the activator component (AK) contains an alkaline phosphate, preferably tetra potassium and/or tetra sodium pyrophosphate.

2. Use of a multi-component building material system for producing a mortar for filling a cavity adjacent to a building ground containing calcium sulphate anhydrite according to claim 1,
**characterized in that** the latent hydraulic binder is granulated blast furnace slag, preferably sulphate-excitable granulated blast furnace slag.

3. Use of a multi-component building material system for producing a mortar for filling a cavity adjacent to a building ground containing calcium sulphate anhydrite according to one of claims 1 or 2,
**characterized in that** the base component (GK) comprises fly ash and/or silica fume.

4. Use of a multi-component building material system for producing a mortar for filling a cavity adjacent to a building ground containing calcium sulphate anhydrite according to claim 1 - 3,
**characterized in that** the base component (GK) comprises water, at least one additive and the latent-hydraulic binder, the proportion of the latent-hydraulic binder being 5 - 30 wt.%, preferably 10 - 20 wt.%.

5. Use of a multi-component building material system for producing a mortar for filling a cavity adjacent to a building ground containing calcium sulphate anhydrite according to any one of claims 1 - 4,
**characterized in that** the multi-component building material system contains the salt in a proportion of 0.2 - 5% by weight.

6. Use of a multi-component building material system for producing a mortar for filling a cavity adjacent to a building ground containing calcium sulphate anhydrite according to any one of claims 1 - 5,
**characterized in that** the proportion of the at least one additive in the base component (GK) is 40 - 80 wt.%.

7. Use of a multi-component building material system for producing a mortar for filling a cavity adjacent to a building ground containing calcium sulphate anhydrite according to one of claims 1 - 6, **characterized in that** the base component contains fly ash in 10 - 30 wt.%.

8. Use of a multi-component building material system for producing a mortar for filling a cavity adjacent to a subsoil containing calcium sulphate anhydrite according to one of claims 1 - 7, **characterized in that** the cavity is an annular gap of a tunnel structure.

9. A method of producing a mortar for filling a cavity adjacent to a building ground containing calcium sulphate anhydrite, wherein
a cement clinker-free base component (CC) with a latent hydraulic binder and at least one aggregate is mixed with water,
an activator component (AK) with an alkaline and/or sulphatic activator for activating the latent hydraulic binder is dissolved or slurried in water and mixed with the base component (GK) to form a base component/activator component mixture,
wherein the base component (GK), the activator component and/or the base component/activator component mixture (GAM) contains a salt whose anions form with calcium cations a solubility product which is less than 10⁻⁸ in an aqueous solution of 25°C,
wherein the salt component (SK) is contained in the base component (GK),
and wherein the anions of the salt component (SK) are selected from a group comprising oxalate and phosphate and wherein the activator component (AK) contains an alkaline phosphate, preferably tetra potassium and/or tetra sodium pyrophosphate.

10. A method of filling a cavity adjacent to a subsoil containing calcium sulphate anhydrite, wherein
a cement clinker-free base component with a latent hydraulic binder and at least one additive is mixed with water,
an activator component is dissolved or slurried in water with an alkaline and/or sulphatic activator to activate the latent-hydraulic binder,
the base component (GK) and the activator component (AK) are filled into the cavity separately from each other or as a base-component/activator-component mixture (GAM),
**characterized in that** the base component (GK), the activator component (AK) and/or the base component/activator component mixture (GAM) contains a salt whose anions with calcium cations form a solubility product which is less than 10⁻⁸ in an aqueous solution at 25°C,
wherein the salt component (SK) is contained in the basic component (GK),
and wherein the anions of the salt component (SK) are selected from a group comprising oxalate and phosphate and wherein the activator component (AK) contains an alkaline phosphate, preferably tetra potassium and/or tetra sodium pyrophosphate.

## Revendications

1. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, le système de matériaux de construction à plusieurs composants comprenant :
un composant de base (GK) sans ciment clinker avec
- un liant hydraulique latent et
- au moins un agrégat, et
un composant activateur (AK) avec
- au moins un activateur alcalin et/ou sulfatique pour activer le liant hydraulique latent, et
un composant salin (SK) avec au moins un sel dont les anions forment avec les cations calcium dans une solution aqueuse de 25°C un produit de solubilité qui est inférieur à 10⁻⁸ , au moins le composant de base ainsi que le composant activateur étant présents avant le gâchage, séparés spatialement les uns des autres, et le composant salin (SK) étant contenu dans le composant de base (GK),
dans lequel les anions du composant sel (SK) sont choisis dans un groupe comprenant l'oxalate et le phosphate, et dans lequel le composant activateur (AK) contient un phosphate alcalin, de préférence du pyrophosphate tétrapotassique et/ou tétrasodique.

2. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, selon la revendication 1,
**caractérisé en ce que** le liant hydraulique latent est du laitier granulé broyé, de préférence du laitier granulé excitable par voie sulfatique.

3. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, selon l'une des revendications 1 ou 2,
**caractérisé en ce que** le composant de base (GK) comprend des cendres volantes et/ou de la poussière de silice.

4. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, selon l'une des revendications 1 à 3,
**caractérisé en ce que** le composant de base (GK) comprend de l'eau, au moins un agrégat et le liant hydraulique latent, la proportion du liant hydraulique latent étant de 5 à 30 % en poids, de préférence de 10 à 20 % en poids.

5. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, selon l'une des revendications 1 à 4,
**caractérisé en ce que** le système de matériau de construction à plusieurs composants contient le sel dans une proportion de 0,2 à 5 % en poids.

6. Utilisation d'un système de matériaux de construction à plusieurs composants pour la fabrication d'un mortier pour le remplissage d'une cavité adjacente à un sol de fondation, le sol de fondation contenant d'anhydrite de sulfate de calcium, selon l'une des revendications 1 à 5,
**caractérisé en ce que** la proportion dudit au moins un agrégat dans le composant de base (GK) est de 40 à 80 % en poids.

7. Utilisation d'un système de matériaux de construction à plusieurs composants pour la fabrication d'un mortier destiné à remplir une cavité adjacente à un sol de fondation, le sol de fondation contenant d'anhydrite de sulfate de calcium, selon l'une des revendications 1 à 6, **caractérisée en ce que** le composant de base contient de 10 à 30 % en poids des cendres volantes.

8. Utilisation d'un système de matériaux de construction à plusieurs composants pour la fabrication d'un mortier destiné à remplir une cavité adjacente à un sol de fondation, le sol de fondation contenant d'anhydrite de sulfate de calcium, selon l'une des revendications 1 à 7, **caractérisée en ce que** la cavité est un espace annulaire d'un ouvrage de tunnel.

9. Procédé de fabrication d'un mortier pour le remplissage d'une cavité adjacente à un sol de fondation contenant d'anhydrite de sulfate de calcium, dans lequel
un composant de base (GK) sans ciment clinker avec un liant hydraulique latent et au moins un agrégat est gâché avec de l'eau,
un composant activateur (AK) est dissous ou mis en suspension dans l'eau avec un activateur alcalin et/ou sulfatique pour activer le liant hydraulique latent et est mélangé avec le composant de base (GK) pour former un mélange composant de base/composant activateur ,
dans lequel le composant de base (GK), le composant activateur et/ou le mélange composant de base/composant activateur (GAM) contient un sel dont les anions forment avec les cations calcium un produit de solubilité qui est inférieur à 10⁻⁸ dans une solution aqueuse de 25°C,
où le composant salin (SK) est contenu dans le composant de base (GK),
et dans lequel les anions du composant salin (SK) sont choisis dans un groupe comprenant l'oxalate et le phosphate, et dans lequel le composant activateur (AK) contient un phosphate alcalin, de préférence du pyrophosphate tétrapotassique et/ou tétrasodique.

10. Procédé de remplissage d'une cavité adjacente à un sol de fondation contenant d'anhydrite de sulfate de calcium, dans lequel
un composant de base exempt de clinker de ciment avec un liant hydraulique latent et au moins un agrégat est gâché avec de l'eau,
un composant activateur est dissous ou mis en suspension dans l'eau avec un activateur alcalin et/ou sulfatique pour activer le liant hydraulique latent ,
le composant de base (GK) et le composant activateur (AK) sont remplis dans la cavité séparément ou sous la forme d'un mélange composants de base/composants activateurs (GAM),
**caractérisé en ce que** le composant de base (GK), le composant activateur (AK) et/ou le mélange composant de base/composant activateur (GAM) contient un sel dont les anions forment avec les cations calcium un produit de solubilité qui est inférieur à 10⁻⁸ dans une solution aqueuse de 25°C,
le composant salin (SK) étant contenu dans le composant de base (GK),
et dans lequel les anions du composant salin (SK) sont choisis dans un groupe comprenant l'oxalate et le phosphate, et dans lequel le composant activateur (AK) contient un phosphate alcalin, de préférence du pyrophosphate tétrapotassique et/ou tétrasodique.
